# EUROPEAN PATENT APPLICATION

(11) **EP 2 596 846 A1**
(43) Date of publication of application: **29.05.2013**
(21) Application number: 12184182.9
(22) Date of filing: 13.09.2012
(51) Int. Cl.: B01D 53/00, C10L 3/10

(54) **Expander and method for CO2 separation**

(30) Priority: 22.11.2011 US 201113302131
(71) Applicant: General Electric Company, Schenectady, NY 12345 (US)
(72) Inventor: Hofer, Douglas Carl, Niskayuna, NY 12309 (US)
(74) Representative: Cleary, Fidelma

(57) **Abstract**

In one aspect an expander (100) for separating carbon dioxide (CO₂) from a gas stream (101) is presented. The expander includes (a) a housing (114); (b) at least one rotating component (115) disposed within the housing; (c) at least one inlet (111) disposed in the housing, wherein the inlet is configured to receive the gas stream (112); (d) at least one first outlet (112) disposed in the housing, wherein the first outlet is configured to discharge a CO₂ rich stream (102); and (e) at least one second outlet (113) disposed in the housing, wherein the second outlet is configured to discharge a CO₂ lean stream (103). The expander is configured to cool the gas stream such that a portion of CO₂ in the gas stream forms one or both of solid CO₂ and liquid CO₂. The expander is further configured to separate at least a portion of one or both of solid CO₂ and liquid CO₂ from the gas stream to form the CO₂ rich stream and the CO₂ lean stream. A system and method for separating carbon dioxide (CO₂) from a gas stream are also presented.

## Description

### BACKGROUND

The present disclosure relates to an expander and a method for carbon dioxide (CO₂) separation. More particularly, the present disclosure relates to an expander and a method for solid CO₂ separation.

Power generating processes that are based on combustion of carbon containing fuel typically produce CO₂ as a byproduct. It may be desirable to capture or otherwise separate the CO₂ from the gas mixture to prevent the release of CO₂ into the environment and/or to utilize CO₂ in the power generation process or in other processes.

However, typical CO₂ capture processes, such as, for example, amine-based process may be energy intensive as well as capital intensive. Low temperature and/or high pressure processes may also be used for CO₂ separation, wherein the separation is achieved by condensation of CO₂ to form liquid CO₂ or solid CO₂. However, the systems and methods for condensing CO₂ may require additional separation systems and further may have reduced efficiencies because of frosting of surfaces of the system components.

Thus, there is a need for efficient systems and methods for separation of CO₂. Further, there is a need for efficient systems and methods for separation of solid CO₂, thereby enabling efficient transport and/or storage of separated CO₂.

### BRIEF DESCRIPTION

Embodiments of the present invention are included to meet these and other needs. One embodiment is an expander for separating carbon dioxide (CO₂) from a gas stream. The expander includes (a) a housing; (b) at least one rotating component disposed within the housing; (c) at least one inlet disposed in the housing, wherein the inlet is configured to receive the gas stream;(d) at least one first outlet disposed in the housing, wherein the first outlet is configured to discharge a CO₂ rich stream; and (d) at least one second outlet disposed in the housing, wherein the second outlet is configured to discharge a CO₂ lean stream. The expander is configured to cool the gas stream such that a portion of CO₂ in the gas stream forms one or both of solid CO₂ and liquid CO₂. The expander is further configured to separate at least a portion of one or both of solid CO₂ and liquid CO₂ from the gas stream to form the CO₂ rich stream and the CO₂ lean stream.

Another embodiment is a system for separating carbon dioxide (CO₂) from a gas stream. The system includes (i) a compression stage and a cooling stage configured to compress and cool a gas stream. The system further includes (iii) an expansion stage comprising an expander in fluid communication with the cooling stage or the compression stage. The expander includes (a) a housing; (b) at least one rotating component disposed within the housing; (c) at least one inlet disposed in the housing, wherein the inlet is configured to receive the gas stream;(d) at least one first outlet disposed in the housing, wherein the first outlet is configured to discharge a CO₂ rich stream; and (e) at least one second outlet disposed in the housing, wherein the second outlet is configured to discharge a CO₂ lean stream. The expander is configured to cool the gas stream such that a portion of CO₂ in the gas stream forms one or both of solid CO₂ and liquid CO₂. The expander is further configured to separate at least a portion of one or both of solid CO₂ and liquid CO₂ from the gas stream to form the CO₂ rich stream and the CO₂ lean stream.

Another embodiment is a method of separating carbon dioxide (CO₂) from a gas stream. The method includes (i) providing an expander. The expander includes (a) a housing; (b) at least one rotating component disposed within the housing; (c) at least one inlet disposed in the housing, wherein the inlet is configured to receive the gas stream;(d) at least one first outlet disposed in the housing, wherein the first outlet is configured to discharge a CO₂ rich stream; and (e) at least one second outlet disposed in the housing, wherein the second outlet is configured to discharge a CO₂ lean stream. The method further includes (ii) cooling the gas stream in the expander such that a portion of CO₂ in the gas stream forms one or both of solid CO₂ and liquid CO₂. The method further includes (iii) separating at least a portion of one or both of solid CO₂ and liquid CO₂ from the gas stream in the expander to form the CO₂ rich stream and the CO₂ lean stream.

Other embodiments, aspects, features, and advantages of the invention will become apparent to those of ordinary skill in the art from the following detailed description, the accompanying drawings, and the appended claims.

### BRIEF DESCRIPTION OF THE DRAWING FIGURES

These and other features, aspects, and advantages of the present invention will become better understood when the following detailed description is read with reference to the accompanying drawings in which like characters represent like parts throughout the drawings, wherein:
FIG. 1 is a schematic of an expander for CO₂ separation from a gas stream, in accordance with one embodiment of the invention.
FIG. 2 is a schematic of a cross-sectional view of an expander for CO₂ separation from a gas stream, in accordance with one embodiment of the invention.
FIG. 3 is a schematic of a cross-sectional view of a multi-stage expander for CO₂ separation from a gas stream, in accordance with one embodiment of the invention.
FIG. 4 is a schematic of an expander for CO₂ separation and separation channels, in accordance with one embodiment of the invention.
FIG. 5 is a block diagram of a system for CO₂ separation from a gas stream, in accordance with one embodiment of the invention.
FIG. 6 is a block diagram of a system for CO₂ separation from a gas stream, in accordance with one embodiment of the invention.
FIG. 7 is a block diagram of a system for CO₂ separation from a gas stream, in accordance with one embodiment of the invention.
FIG. 8 is a block diagram of a system for CO₂ separation from a gas stream, in accordance with one embodiment of the invention.
FIG. 9 is a block diagram of a system for CO₂ separation from a gas stream, in accordance with one embodiment of the invention.
FIG. 10A is a schematic of a heated blade, in accordance with one embodiment of the invention.
FIG. 10B is a schematic of a heated blade, in accordance with one embodiment of the invention.
FIG. 10C is a schematic of flow path of heating gas in the heated blade, in accordance with one embodiment of the invention.

### DETAILED DESCRIPTION

As discussed in detail below, embodiments of the present invention include expanders and systems suitable for CO₂ separation. As discussed in detail below, embodiments of the present invention include integrated expanders and systems including the integrated expanders capable of cooling the gas stream to form liquid CO₂ or solid CO₂, and further capable of separating at least a portion of the liquid CO₂ or the solid CO₂ in the expander itself. Embodiments of the present invention further include methods suitable for CO₂ separation using the integrated expander.

Approximating language, as used herein throughout the specification and claims, may be applied to modify any quantitative representation that could permissibly vary without resulting in a change in the basic function to which it is related. Accordingly, a value modified by a term or terms, such as "about", is not limited to the precise value specified. In some instances, the approximating language may correspond to the precision of an instrument for measuring the value.

In the following specification and the claims, the singular forms "a", "an" and "the" include plural referents unless the context clearly dictates otherwise. As used herein, the term "or" is not meant to be exclusive and refers to at least one of the referenced components being present and includes instances in which a combination of the referenced components may be present, unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur - this distinction is captured by the terms "may" and "may be".

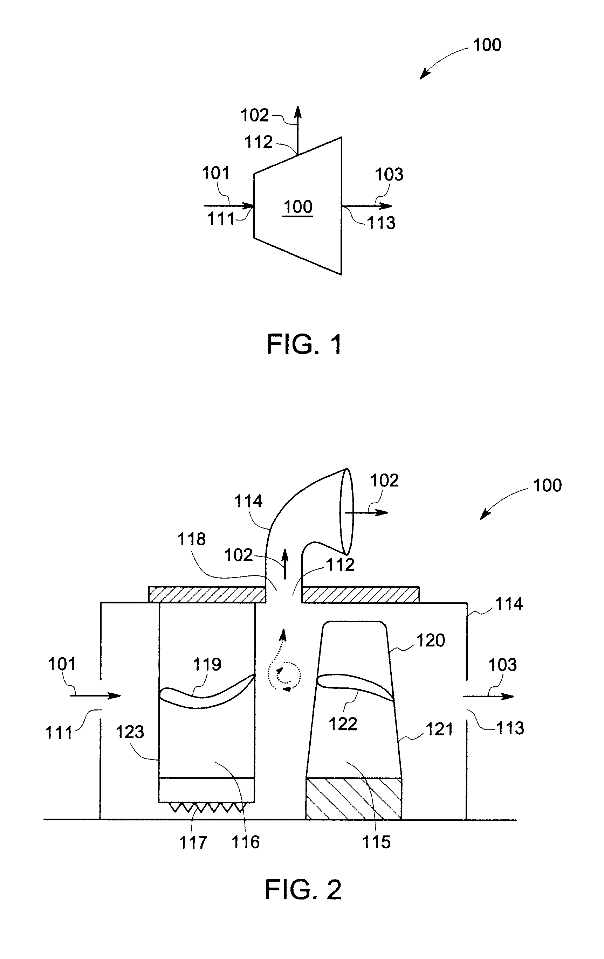

In one embodiment, as shown in Figures 1 and 2, an expander for separating CO₂ from a gas stream is presented. The term "expander" as used herein refers to a radial, axial, or mixed flow turbo-machine through which a gas or gas mixture is expanded to produce work.

Fig. 1 shows a simplified block diagram of an expander 100, in accordance with one embodiment of the invention. Fig. 2 shows a cross-sectional view of an expander 100, in accordance with one embodiment of the invention. As indicated in Fig. 2, the expander 100 includes a housing 114. As indicated in Fig. 2, the expander 100 further includes at least one rotating component or a rotor 115. In some embodiments, the expander 100 further includes at least one stationary component 116. The stationary component may include a stator or a nozzle. As indicated in Fig. 2, the expander 100 further includes one or more seals 117, in some embodiments. As indicated in Fig. 2, the expander 100 further includes one or more blades 119/122. In some embodiments, the expander 100 further includes one or more stationary blades 119 and one or more rotor blades 122, as indicated in Fig. 2.

As indicated in Figures 1 and 2, the expander 100 further includes at least one inlet 111 disposed in the housing 114. The inlet 111 is configured to receive the gas stream 101, in some embodiments. In one embodiment, the gas stream 101 includes a gas mixture emitted as a result of the processing of fuels, such as, natural gas, biomass, gasoline, diesel fuel, coal, oil shale, fuel oil, tar sands, and combinations thereof. In some embodiments, the gas stream 101 includes a flue gas. In some embodiments, the gas stream 101 includes a gas mixture emitted from a gas turbine. In some embodiments, the gas stream 101 includes syngas generated by gasification or a reforming plant. In particular embodiments, the gas stream 101 includes a gas mixture emitted from a coal or natural gas-fired power plant.

As noted earlier, the gas stream 101 includes carbon dioxide. In some embodiments, the gas stream 101 further includes one more of nitrogen, oxygen, or water vapor. In some embodiments, the gas stream 101 further includes impurities or pollutants, examples of which include, but are not limited to, nitrogen oxides, sulfur oxides, carbon monoxide, hydrogen sulfide, unburnt hydrocarbons, particulate matter, and combinations thereof. In some embodiments, the gas stream 101 is substantially free of the impurities or pollutants. In some embodiments, the gas stream 101 includes nitrogen, oxygen, and carbon dioxide. In some embodiments, the gas stream 101 includes nitrogen and carbon dioxide.

In some embodiments, the amount of impurities or pollutants in the gas stream 101 is less than about 50 mole percent. In some embodiments, the amount of impurities or pollutants in the gas stream 101 is less than about 20 mole percent. In some embodiments, the amount of impurities or pollutants in the gas stream 101 is in a range from about 10 mole percent to about 20 mole percent. In some embodiments, the amount of impurities or pollutants in the gas stream 101 is less than about 5 mole percent.

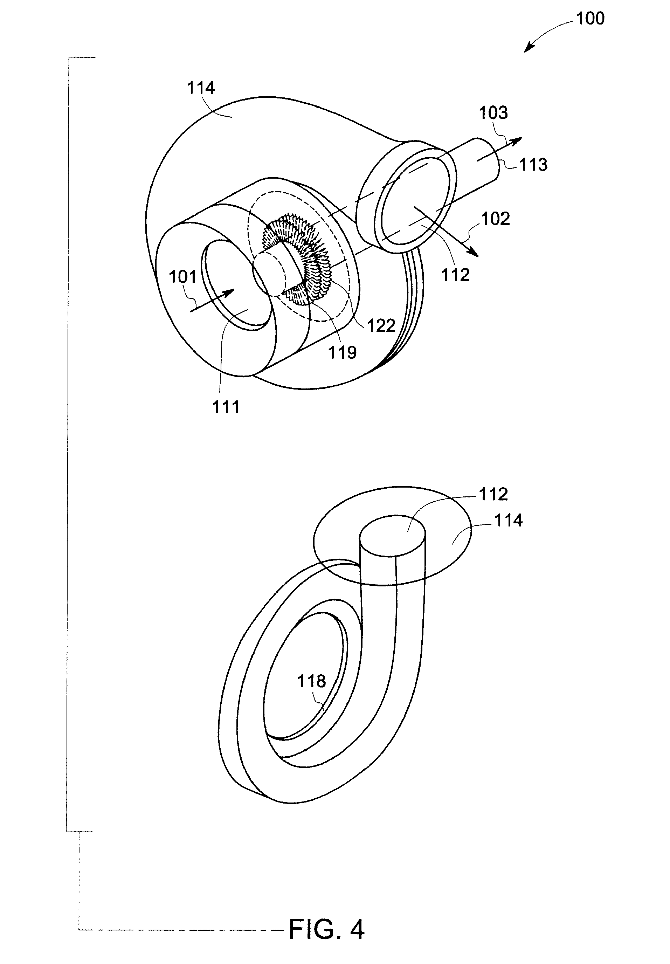

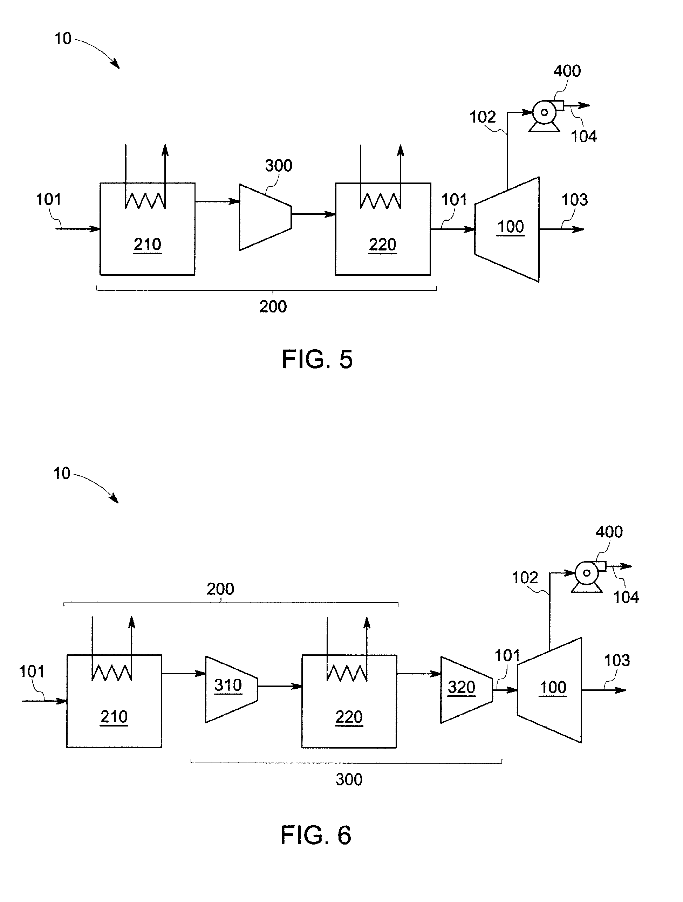

In some embodiments, the expander 100 includes at least one inlet 111 configured to receive a gas stream 101, as indicated in Figures 1 and 2, from a hydrocarbon processing, combustion, gasification or a similar power plant (not shown). In some other embodiments, as indicated in Figures 4 and 5, the expander 100 includes at least one inlet 111 configured to receive a gas stream 101 from one more cooling and compression stages.

As noted earlier, the gas stream 101 expands in the expander 100 and as the work is extracted from the expanding gas stream, the gas stream 101 is cooled inside the expander 100. Further, I n some embodiments, cooling the gas stream 101 in the expander 100 results in formation of one or both of solid CO₂ and liquid CO₂ in the expander 100. In some embodiments, the expander 100 is configured to cool the gas stream 101 such that a portion of CO₂ in the gas stream 101 forms one or both of solid CO₂ and liquid CO₂.

In some embodiments, the expander 100 is configured to cool the gas stream 101 such that a portion of CO₂ in the gas stream 101 primarily forms liquid CO₂. The term "primarily forms liquid CO₂" as used herein means that the amount of solid CO₂ formed in the expander is less than about 2 mass percent. In some embodiments, the expander 100 is configured to cool the gas stream 101 such that a portion of CO₂ in the gas stream 101 primarily forms solid CO₂. The term "primarily forms solid CO₂" as used herein means that the amount of liquid CO₂ formed in the expander is less than about 2 mass percent.

In some embodiments, the expander 100 is further configured to separate at least a portion of one or both of solid CO₂ and liquid CO₂ formed in the expander 100 from the gas stream 101 to form a CO₂ rich stream 102. The term "CO₂ rich stream" as used herein refers to a stream including one or both of liquid CO₂ and solid CO₂. It should be noted that the term "CO₂ rich stream" includes embodiments wherein the CO₂ rich stream includes one or more carrier gases. In some embodiments, the CO₂ rich stream further includes one or more carrier gases to transport the liquid CO₂ or solid CO₂ to the first outlet 112 by centrifugal force. In some embodiments, the CO₂ rich stream further includes one or more nitrogen gas, oxygen gas, or carbon dioxide gas.

In some embodiments, the amount of CO₂ in the CO₂ rich stream is at least about 50 mass percent of the CO₂ rich stream. In some embodiments, the amount of CO₂ in the CO₂ rich stream is at least about 60 mass percent of the CO₂ rich stream. In some embodiments, the amount of CO₂ in the CO₂ rich stream is at least about 75 mass percent of the CO₂ rich stream.

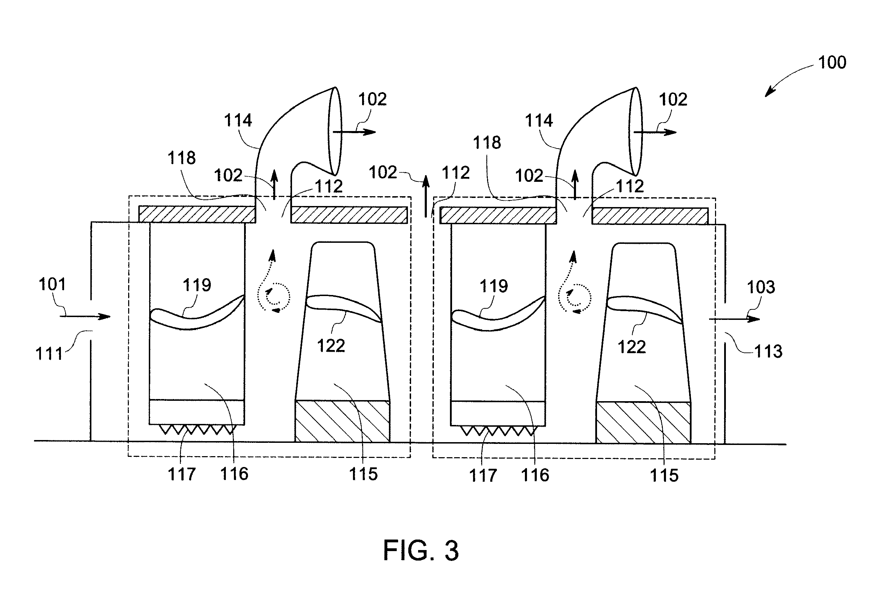

In some embodiments, the expander 100 further includes a plurality of outlets 112 and 113, as indicated in Figures 1 and 2. In some embodiments, as indicated in Figures 1 and 2, the expander 100 further includes at least one first outlet 112 configured to discharge a CO₂ rich stream 102. In some embodiments, the housing 114 includes one or more separation channels 118 in fluid communication with the at least one first outlet 112, as indicated in Fig. 2. In some embodiments, the one or more separation channels 118 are configured to separate the CO₂ rich stream 102 from the gas stream 101. In some embodiments, the expander 100 further includes a volute/housing 114 including the one or more separation channels 118 configured to discharge the CO₂ rich stream 102, as indicated in Figures 2-4. In some embodiments the at least one first outlet 112 is configured to discharge the CO₂ rich stream through the separation channels 118 present in the housing/volute 114, as indicated in Figures 2-4. As indicated in Figures 2 and 3, in some embodiments, the first outlet 112 is disposed upstream of the rotating component. The term "upstream" as used herein refers to a location between the stationary component 116 and the rotating component 115. As indicated in Fig. 4, in some embodiments, the first outlet 112 is disposed in the housing 114 at a location between the stationary component 116 and the rotating component 115. In embodiments including a multi-stage expander, as indicated in Fig. 3, the first outlet is located upstream of at least one rotating component. In embodiments including a plurality of first outlets 112, a first outlet 112 is located upstream of at least one rotating component 115, as indicated in Fig. 3.

In some embodiments, the flow field within the expander 100 may be utilized to aid in separation of the liquid CO₂ or the solid CO₂ by incorporating the one or more separation channels 118 into the expander housing 114. In some embodiments, the separation channels 118 may be designed such that the liquid or solid particles enter due to centrifugal force and may be precluded from re-entering the expander flow path by a deflector.

As noted earlier, in some embodiments, the CO₂ rich stream 102 may be separated from the gas stream 101 via one or more the separation channels 118. This is in contrast to typical expanders used in CO₂ separation systems, wherein the expander includes only one outlet for the cooled gas stream, and does not include an integrated separation system. Without being bound by any theory, it is believed that an expander design that allows for integrated separation of the liquid CO₂ or solid CO₂ from the gas stream 101 precludes the need for an additional separator used in typical CO₂ separation systems. Further, the integrated separation channels disposed in the housing 114 of the expander 100 may preclude the need for an additional separator typically used in CO₂ separation systems.

In some embodiments, the expander 100 is configured to separate at least about 50 mass percent of CO₂ present in the gas stream 101. In some embodiments, the expander 100 is configured to separate at least about 70 mass percent of CO₂ present in the gas stream 101. In some embodiments, the expander 100 is configured to separate at least about 90 mass percent of CO₂ present in the gas stream 101. In some embodiments, the expander 100 is configured to separate at least about 95 mass percent of CO₂ present in the gas stream 101.

As noted earlier, the expander 100 is configured to cool the gas stream 101 to form liquid CO₂ or solid CO₂. In particular embodiments, the expander 100 is configured to cool the gas stream 101 such that a portion of CO₂ in the gas stream 101 primarily forms solid CO₂. The term "primarily forms solid CO₂" as used herein means that the amount of liquid CO₂ formed in the expander 100 is less than about 2 mass percent.

In such embodiments, the expander 100 is further configured to separate the solid CO₂ from the gas stream 101 to form a solid CO₂ rich stream 102. The term "solid CO₂ rich stream" as used herein refers to a stream including solid CO₂. It should be noted that the term "solid CO₂ rich stream" includes embodiments wherein the solid CO₂ rich stream includes one or more carrier gases. In some embodiments, the solid CO₂ rich stream further includes one or more nitrogen gas, oxygen gas, or carbon dioxide gas.

In some embodiments, as indicated in Figures 1 and 2, the expander 100 further includes at least one first outlet 112 configured to discharge a solid CO₂ rich stream 102. In some embodiments, the housing 114 includes one or more separation channels 118 in fluid communication with the at least one first outlet 112, as indicated in Fig. 2. In some embodiments, the one or more separation channels 118 are configured to separate the solid CO₂ rich stream 102 from the gas stream 101. As noted earlier, in some embodiments, the solid CO₂ rich stream 102 may include one or more carrier gases and may be transported to the first outlet 112 along with the carrier gases by centrifugal force.

In some embodiments, at least one component of the expander 100 further includes a coating configured to preclude adhesion of solid CO₂ to a surface of the expander component. In some embodiments, one or more of the housing 114, the rotating component 115, or the stationary component 116 may include a coating configured to preclude adhesion of solid CO₂ to a surface of the expander component. In particular embodiments, a rotating component 115 in the expander 100 includes a coating 120. In some embodiments, the coating 120 is configured to preclude adhesion of solid CO₂ to a surface 121 of the rotating component 115. In some embodiments, the coating 120 includes a non-stick material capable of precluding adhesion of solid CO₂ to the surface 121 of the rotating component 115.

In some embodiments, the expander 100 further includes at least one heated component. In some embodiments, the heated component is configured to preclude adhesion of solid CO₂ to a surface of the expander component. In some embodiments, one or more of the housing 114, the rotating component 115, or the stationary component 116 may include a heated component to preclude adhesion of solid CO₂ to a surface of the expander component. In particular embodiments, a stationary component 116 in the expander 100 is heated to preclude adhesion of solid CO₂ to a surface 123 of the stationary component 116.

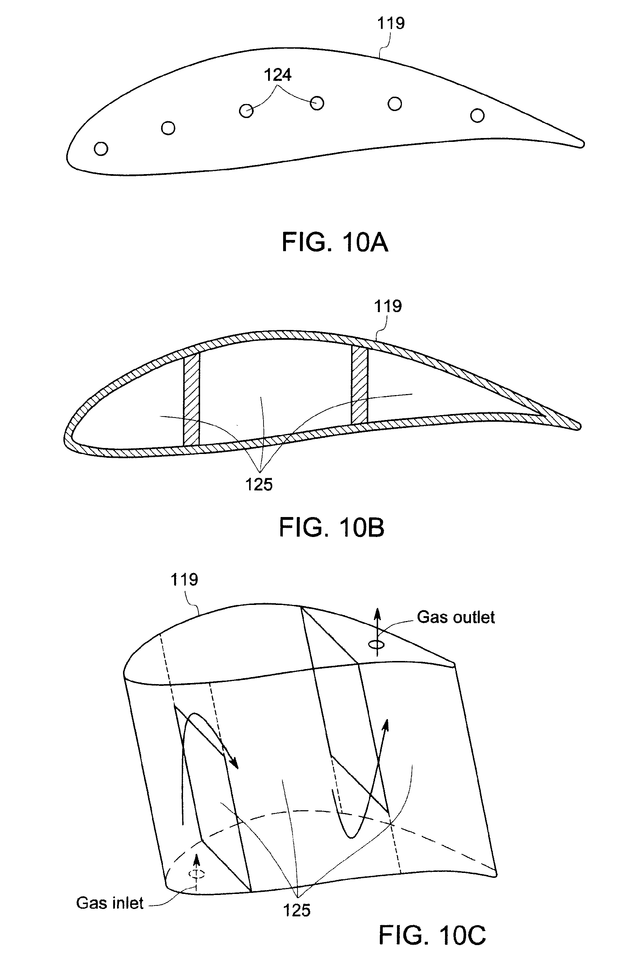

In some embodiments, one or more of the stationary blades may be heated by using electrical heating elements. Fig. 10A illustrates one embodiment of the invention, including an electrically heated blade 119. The blade 119, as indicated in Fig. 10 further includes heated elements 122 disposed in the holes of the blade 119. In some embodiments, one or more components of the expander 100 may be heated by circulating air or gas. Fig. 10B illustrates one embodiment of the invention, including a blade 119 heated by circulating gas. The blade 119, in some embodiments may further include gas flow channels 125, such as, for example, Z-shaped channels, as indicated in Fig. 10B. In some embodiments, the gas flow channels may have any suitable shape, such as, for example, U-shape, E-shape, and the like. Fig. 10C further shows an illustrative flow path of the heating gas in the heated blade 119, in some embodiments of the invention.

Thus, the expander configuration, in accordance with some embodiments of the invention may advantageously allow for separation of solid CO₂ from the gas stream in the expander itself, thus precluding the need for an additional separator. Further, an expander configuration in accordance with some embodiments of the invention may advantageously preclude adhesion of solid CO₂ to the surface of the expander components, thus providing for efficient CO₂ separation.

As indicated in Figures 1 and 2, the expander 100 further includes at least one second outlet 113 configured to discharge a CO₂ lean stream 103. As indicated in Figures 2 and 3, in some embodiments, the second outlet is disposed downstream of the rotating component. In embodiments including a multi-stage expander, as indicated in Fig. 3, the second outlet 113 may be located downstream of at least one rotating component 114. In some embodiments, the second outlet 113 may be located downstream of the last rotating component 114 in the expander 100. The term "CO₂ lean stream" as used herein refers to a stream in which the CO₂ content is lower than that of the CO₂ content in the gas stream 101. In some embodiments, as noted earlier, almost all of the CO₂ in the gas stream 101 is separated in the form of liquid CO₂ or solid CO₂ in the expander 100. In such embodiments, the CO₂ lean stream is substantially free of CO₂. In some other embodiments, a portion of the liquid CO₂ or solid CO₂ may not be separated in the expander 100 and the CO₂ lean stream 103 may include CO₂ that is not separated.

In some embodiments, the CO₂ lean stream 103 may include one or more non-condensable components. In some embodiments, the CO₂ lean stream 103 may include one or more liquid components. In some embodiments, the CO₂ lean stream 103 may include one or more solid components. In such embodiments, the CO₂ lean stream 103 may be further configured to be in fluid communication with one or both of a liquid-gas and a solid-gas separator. In some embodiments, the CO₂ lean stream 103 may include one or more of nitrogen, oxygen, or sulfur dioxide. In some embodiments, the CO₂ lean stream 103 may further include carbon dioxide. In some embodiments, the CO₂ lean stream 103 may include gaseous CO₂, liquid CO₂, solid CO₂, or combinations thereof.

In particular embodiments, the CO₂ lean stream is substantially free of CO₂. The term "substantially free" as used in this context means that the amount of CO₂ in the CO₂ lean stream 103 is less than about 10 mass percent of the CO₂ in the gas stream 101. In some embodiments, the amount of CO₂ in the CO₂ lean stream 103 is less than about 5 mass percent of the CO₂ in the gas stream 101. In some embodiments, the amount of CO₂ in the CO₂ lean stream 103 is less than about 1 mass percent of the CO₂ in the gas stream 101.

In some embodiments, the expander 100 for separating CO₂ from a gas stream 101 may include a single-stage expander, as illustrated in Fig. 2. In some other embodiments, the expander 100 for separating CO₂ from a gas stream 101 may include a multi-stage expander 100, as illustrated in Fig. 3. As indicated, in Fig. 3, the multi-stage expander may include a plurality of stationary components 116 and a plurality of rotating components 115. Further the multi-stage expander 100 may be configured to include a plurality of first outlets 112. As indicated in Fig. 3, the plurality of first outlets 112 may be configured to discharge a plurality of CO₂ rich streams 102 at different stages of the multi-stage expander 100. The multi-stage expander 100 further includes at least one second outlet 113, in some embodiments, as indicated in Fig. 3. In some embodiments, the multi-stage expander may include a plurality of second outlets 113 (not shown).

In some embodiments, a system 10 for separating carbon dioxide (CO₂) from a gas stream 101 is presented, as indicated in Figures 5-9. In one embodiment, the system 10 includes at least one cooling stage 200 configured to receive the gas stream 101. The system 10 further includes at least one compression stage 300 in fluid communication with the one or more cooling stage 200. In one embodiment, a combination of the at least one compression stage 300 and the at least one cooling stage 200 is configured to compress and cool the gas stream 101 prior to expansion and cooling of the gas stream 101 in the expander 100.

In some embodiments, the gas stream 101 may be compressed to a desired pressure by using at least one compression stage, as indicated by 300 in Figures 5 and 6. As indicated in Fig. 6, the compression stage 300 may further include one or more compressors, such as, 310 and 320, in some embodiments. It should be noted that in Fig. 6, the two compressors 310 and 320 are shown as an exemplary embodiment only and the actual number of compressors and their individual configuration may vary depending on the end result desired.

As indicated in Figures 5 and 6, the cooling stage 200 may further include one or more heat exchangers, such as, 210 and 220, in some embodiments. It should be noted that in Figures 5 and 6, the two heat exchangers 210 and 220 are shown as an exemplary embodiment only and the actual number of heat exchangers and their individual configuration may vary depending on the end result desired. In some embodiments, one or more of the heat exchangers may be cooled using a cooling medium. In some embodiments, one more of the heat exchangers may be cooled using cooling air, cooling water, or both. In some embodiments, the cooling stage may further include one or more intercoolers (not shown) to cool the gas stream 101 without substantially affecting the pressure.

It should be further noted that in Figures 5 and 6, the configuration of cooling stage 200 and compression stage 300 is shown as an exemplary embodiment only and the actual configuration may vary depending on the end result desired. For example, in some other embodiments, the method may include compressing the gas stream 101 in a compressor 310 prior to cooling the gas stream 101 in a heat exchanger 210.

As noted earlier, the combination of at least one cooling stage 200 and at least one compression stage 300 is in fluid communication with at least one expansion stage 100 including an expander 100, as described herein earlier. As noted earlier, and as indicated in Fig. 2, the expander 100 includes a housing 114 and at least one rotating component or a rotor 115. In some embodiments, the expander 100 further includes at least one stationary component 116. As indicated in Fig. 2, the expander 100 further includes one or more seals 117, in some embodiments.

As indicated in Figures 1 and 2, the expander 100 further includes at least one inlet 111 disposed in the housing 114. The inlet 111 is configured to receive the gas stream 101, in some embodiments. In some embodiments, the expander 100 is configured to cool the gas stream 101 such that a portion of CO₂ in the gas stream 101 forms one or both of solid CO₂ and liquid CO₂.

In some embodiments, the expander 100 is further configured to separate at least a portion of one or both of solid CO₂ and liquid CO₂ formed in the expander 100 from the gas stream 101 to form a CO₂ rich stream 102. In some embodiments, as indicated in Figures 1 and 2, the expander 100 further includes at least one first outlet 112 configured to discharge a CO₂ rich stream 102. In some embodiments, the housing 114 includes one or more separation channels 118 in fluid communication with the at least one first outlet 112, as indicated in Fig. 2. In some embodiments, the one or more separation channels 118 are configured to separate the CO₂ rich stream 102 from the gas stream 101.

As indicated in Figures 1 and 2, the expander 100 further includes at least one second outlet 113 configured to discharge a CO₂ lean stream 103. In some embodiments, as noted earlier, almost all of the CO₂ in the gas stream 101 is separated in the form of liquid CO₂ or solid CO₂ in the expander 100. In such embodiments, the CO₂ lean stream is substantially free of CO₂. The term "substantially free" is as defined herein earlier.

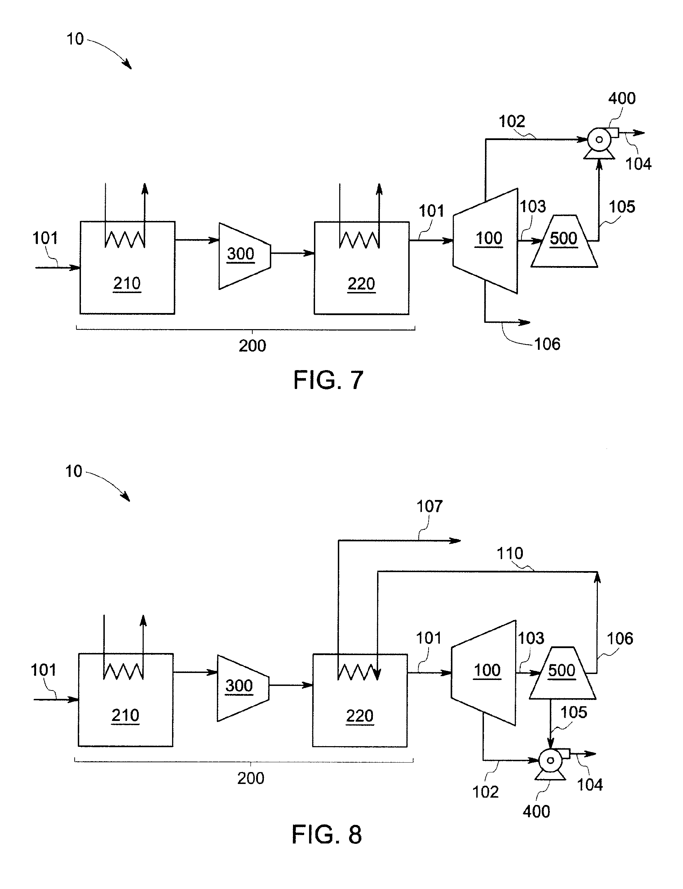

In some other embodiments, a portion of the liquid CO₂ or solid CO₂ may not be separated in the expander 100 and the CO₂ lean stream 103 may include CO₂ that is not separated. In such embodiments, the system 10 further includes at least one separation stage 500 configured to separate a portion of liquid CO₂ or solid CO₂ in the CO₂ lean stream 103 to form a supplementary CO₂ rich stream 105 and a supplementary CO₂ lean stream 106, as indicated in Fig. 7.

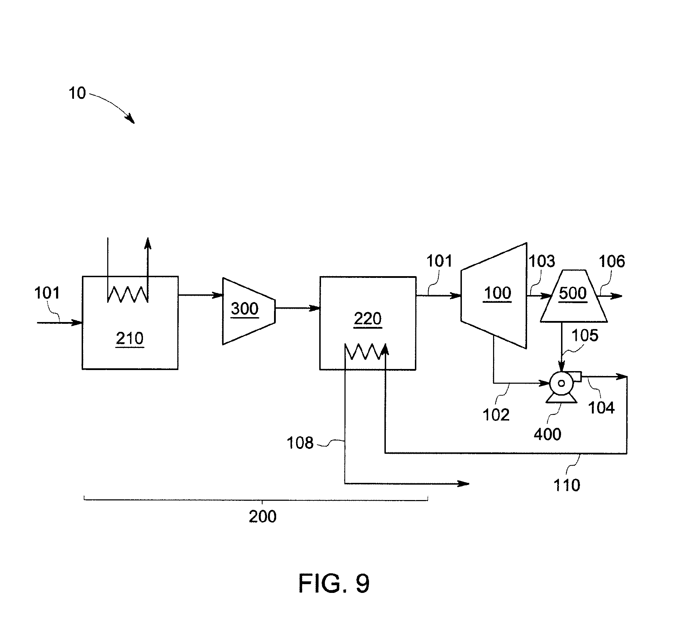

In some embodiments, the system 10 further includes a pressurization stage 400 configured to receive the CO₂ rich stream 102 and increase the pressure of the CO₂ rich stream 102. In some embodiments, the pressurization stage 400 is configured to liquefy the solid CO₂ (if present) and further pressurize the liquid CO₂ to form a pressurized CO₂ rich stream 104. In some embodiments, the system 10 further includes a circulation loop 110 configured to circulate a portion of the pressurized CO₂ rich stream 104 or the supplementary CO₂ lean stream 106 to the one or more cooling stage 200, as indicated in Figures 8 and 9.

In one embodiment, a method for separating CO₂ from a gas stream 101 is provided, as indicated in Figures 1-3. The method includes providing an expander 100. As noted earlier, the expander 100 includes a housing 114 and at least one rotating component 115 disposed within the housing 114. The expander 100 further includes at least inlet 111 configured to receive a gas stream 101. The expander 100 further includes at least one first outlet 112 configured to discharge a CO₂ rich stream and at least one second outlet 113 configured to discharge a CO₂ lean stream 103.

The method further includes cooling the gas stream 101 in the expander such that a portion of CO₂ in the gas stream 101 forms one or both of solid CO₂ and liquid CO₂, as described earlier. The method further includes separating at least a portion of one or both of solid CO₂ and liquid CO₂ from the gas stream in the expander 100 to form the CO₂ rich stream 102 and the CO₂ lean stream 103. In some embodiments, the method further includes separating at least a portion of one or both of solid CO₂ and liquid CO₂ from the gas stream in the expander 100 through one or more separation channels 118, as indicated in Figures 2 and 3. In some embodiments, the method further includes discharging the CO₂ rich stream 102 via the first outlet and discharging the CO₂ lean stream 103 via the second outlet, as indicated in Figures 1-3.

In some embodiments, the method includes separating at least about 50 mass percent of CO₂ present in the gas stream 101 in the expander 100. In some embodiments, the method includes separating at least about 70 mass percent of CO₂ present in the gas stream 101 in the expander. In some embodiments, the method includes separating at least about 90 mass percent of CO₂ present in the gas stream 101 in the expander.

In some embodiments, the method includes cooling the gas stream 101 in the expander 100 to primarily form solid CO₂, as described earlier. In some embodiments, the method further includes separating the solid CO₂ from the gas stream 101 to form a solid CO₂ rich stream 102.

In some embodiments, at least one component of the expander 100 further includes a coating configured to preclude adhesion of solid CO₂ to a surface of the expander component. In some embodiments, one or more of the housing 114, the rotating component 115, or the stationary component 116 may include a coating configured to preclude adhesion of solid CO₂ to a surface of the expander component. In particular embodiments, a rotating component 115 in the expander 100 includes a coating 120. In some embodiments, the coating 120 is configured to preclude adhesion of solid CO₂ to a surface 121 of the rotating component 115. In some embodiments, the coating 120 includes a non-stick material capable of precluding adhesion of solid CO₂ to the surface 121 of the rotating component 115.

In some embodiments, the method further includes heating at least one component of the expander 100. In some embodiments, the heated component is configured to preclude adhesion of solid CO₂ to a surface of the expander component. In some embodiments, one or more of the housing 114, the rotating component 115, or the stationary component 116 may be heated to preclude adhesion of solid CO₂ to a surface of the expander component. In particular embodiments, a stationary component 116 in the expander 100 is heated to preclude adhesion of solid CO₂ to a surface 123 of the stationary component 116. In some embodiments, one or more components of the expander 100 may be heated by circulating air or gas.

Thus, the method of separating CO₂ in accordance with some embodiments of the invention may advantageously allow for separation of solid CO₂ from the gas stream in the expander itself, thus precluding the need for an additional separator. Further, the method of separating CO₂ in accordance with some embodiments of the invention may advantageously preclude adhesion of solid CO₂ to the surface of the expander components, thus providing for efficient CO₂ separation.

In some embodiments, the gas stream 101 may be compressed and cooled prior to entering the expander 100, as described earlier. In some embodiments, the gas stream 101 may be compressed to a desired pressure by using one or more compression stages, as indicated by 300 in Figures 5-9. In one embodiment, the gas stream 101 may be compressed to a pressure and temperature desired for cooling of the gas stream 101 and formation of CO₂ rich stream 102 in the expander 100. In some embodiments, the gas stream 101 may be compressed to a pressure in a range from about 4 atm to about 10 atm prior to the expansion step in the expander 100. In particular embodiments, the gas stream 101 may be compressed to a pressure in a range from about 4 atm to about 8 atm prior to the expansion step in the expander 100.

In some embodiments, the gas stream 101 may be cooled to a desired temperature by using one or more cooling stages, as indicated by 200 in Figures 5-9. In some embodiments, the gas stream may be cooled to a temperature in a range from about - 50 degrees Celsius to about -100 degrees Celsius, prior to the expansion step in the expander 100. In particular embodiments, the gas stream may be cooled to a temperature in a range from about -60 degrees Celsius to about -80 degrees Celsius, prior to the expansion step in the expander 100.

In some embodiments, as noted earlier, the gas stream 101 further includes one or more components in addition to carbon dioxide. In some embodiments, the method further includes generating a CO₂ lean stream 103 after the steps of expansion and CO₂ separation. The term "CO₂ lean stream" 103 refers to a gas stream in which the CO₂ content is lower than that of the CO₂ content in the gas stream 101. In some embodiments, the CO₂ lean stream includes one or more of nitrogen, oxygen, or sulfur dioxide. In some embodiments, the CO₂ lean stream essentially includes nitrogen.

In some embodiments, the CO₂ lean stream is substantially free of CO₂. The term "substantially free" as used in this context means that the amount of CO₂ in the CO₂ lean stream 103 is less than about 10 mass percent of the CO₂ in the gas stream 101. In some embodiments, the amount of CO₂ in the CO₂ lean stream 103 is less than about 5 mass percent of the CO₂ in the gas stream 101. In some embodiments, the amount of CO₂ in the CO₂ lean stream 103 is less than about 1 mass percent of the CO₂ in the gas stream 101.

In some embodiments, the CO₂ lean stream further includes CO₂. In such embodiments, the method may further include the step of separating the CO₂ present in the CO₂ lean stream 103 via a separation stage 500 to form a supplementary CO₂ rich stream 105 and supplementary CO₂ lean stream 106, as indicated in Fig. 7.

In some embodiments, the method further includes increasing a pressure of the CO₂ rich stream 102 using a pressurizing stage 400, as indicated in Fig. 5. In some embodiments, the method includes increasing a pressure of the CO₂ rich stream 102 to a pressure desired for CO₂ sequestration or end-use. In some embodiments, the method further includes generating a pressurized CO₂ rich stream 104 after the pumping step. In some embodiments, the pressurized CO₂ rich stream 104 may be used for enhanced oil recovery, CO₂ storage, or CO₂ sequestration.

In some embodiments, the method further includes circulating the pressurized CO₂ rich stream 104 to one or more cooling stages used for cooling the gas stream. As indicated in Fig. 8, the method further includes circulating the pressurized CO₂ rich stream 104 to a heat exchanger 220 via a circulation loop 110. In some embodiments, the recuperation step may increase the efficiency of the expansion step. The aforementioned discussion is with respect to a single-stage expander. As noted earlier, in some other embodiments, the system 10 and method may include a multi-stage expander 100, described earlier.

With the foregoing in mind, systems and methods for separating CO₂ from a gas stream, according to some exemplary embodiments of the invention, are further described herein. Turning now to Fig. 5, in one embodiment, a system 10 for separating carbon dioxide from a gas stream 101 is presented. In one embodiment, the system 10 includes a cooling stage 200 including a first heat exchanger 210 in fluid communication with a first compression stage 300 including a compressor 300. The compressor 300 is further in fluid communication with a second heat exchanger 220, which is in fluid communication with a first inlet 111 of an expander 100. As indicated, in Fig. 5, the gas stream 101 is cooled and compressed to a desired pressure and temperature before entering the expander 100. Accordingly, the gas stream 101 entering the expander 100 via the inlet 111 may be at a pressure and temperature different from the gas stream entering the first heat exchanger 210.

As noted earlier, the expander 100 further includes at least one first outlet configured to discharge a CO₂ rich stream 102. The system 10, as indicated in Fig. 5, further includes a pressurizing stage 400 configured to pressurize or condense the CO₂ rich stream to form a pressurized CO₂ rich stream 104. In some embodiments, the pressurized CO₂ rich stream 104 may be used for enhanced oil recovery, CO₂ storage, or CO₂ sequestration. The expander 100 further includes at least one second outlet configured to discharge a lean CO₂ rich stream 103, as described earlier.

Turning now to Fig. 6, in one embodiment, a method and a system for separating CO₂ from a gas stream 101 is provided. The method and system is similar to the system and method illustrated in Fig. 4, with the addition that the compression stage 300 includes two compressors 310 and 320.

Turning now to Fig. 7, in one embodiment, a method and a system for separating CO₂ from a gas stream 101 is provided. The method and system is similar to the system and method illustrated in Fig. 5, with the addition that the system 10 further includes a separation stage 500 configured to separate any CO₂ present in the lean CO₂ rich stream 103 to form a supplementary CO₂ rich stream 105 and a supplementary lean CO₂ rich stream 106. As indicated in Fig. 6, the supplementary CO₂ rich stream may be further pressurized in the pressurization stage 400 along with the CO₂ rich stream 102.

Turning now to Fig. 8, in one embodiment, a method and system for separating CO₂ from a gas stream 101 is provided. The method and system is similar to the system and method illustrated in Fig. 7, with the addition that the system 10 further includes a circulation loop 110 configured to circulate a portion of the supplementary lean CO₂ rich stream 106 to one or more heat exchangers, for example, heat exchanger 220. In some embodiments, the recuperation of cold supplementary lean CO₂ rich stream 106 to the heat exchanger 220 may result in additional cooling of the gas stream 101 and result in formation of recuperated supplementary lean CO₂ rich stream 107, as indicated in Fig. 8.

Turning now to Fig. 9, in one embodiment, a method and system for separating CO₂ from a gas stream 101 is provided. The method and system is similar to the system and method illustrated in Fig. 7, with the addition that the system 10 further includes a circulation loop 110 configured to circulate a portion of the pressurized CO₂ rich stream 104 to one or more heat exchangers, for example, heat exchanger 220. In some embodiments, the recuperation of pressurized CO₂ rich stream 104 to the heat exchanger 220 may result in additional cooling of the gas stream 101 and results in formation of recuperated pressurized CO₂ rich stream 108, as indicated in Fig. 9.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An expander (100) for separating carbon dioxide (CO₂) from a gas stream (101), comprising:
(a) a housing (114);
(b) at least one rotating component (115) disposed within the housing;
(c) at least one inlet (111) disposed in the housing, wherein the inlet is configured to receive the gas stream;
(d) at least one first outlet (112) disposed in the housing, wherein the first outlet is configured to discharge a CO₂ rich stream (102); and
(e) at least one second outlet (113) disposed in the housing, wherein the second outlet is configured to discharge a CO₂ lean stream (103);
wherein the expander is configured to cool the gas stream such that a portion of CO₂ in the gas stream forms one or both of solid CO₂ and liquid CO₂, and
wherein the expander is further configured to separate at least a portion of one or both of solid CO₂ and liquid CO₂ from the gas stream (101) to form the CO₂ rich stream (102) and the CO₂ lean stream (103).

2. The expander as defined in claim 1, wherein the expander is configured to cool the gas stream such that a portion of CO₂ in the gas stream primarily forms solid CO₂, and
wherein the expander is further configured to separate the solid CO₂ from the gas stream to form a solid CO₂ rich stream.

3. The expander as defined in claim 1 or claim 2, wherein the housing comprises one or more separation channels in fluid communication with the first outlet and configured to separate the CO₂ rich stream from the gas stream.

4. The expander as defined in any preceding claim, wherein the CO₂ lean stream is substantially free of CO₂.

5. The expander as defined in any preceding claim, wherein at least one component of the expander further comprises a coating configured to preclude adhesion of solid CO₂ to a surface of the expander component.

6. The expander as defined in any preceding claim, wherein the expander further comprises at least one heated component configured to preclude adhesion of solid CO₂ to a surface of the expander component.

7. The expander as defined in any preceding claim, further comprising at least one separator in fluid communication with the second outlet of the expander,
wherein the at least one separator is configured to separate a portion of CO₂ in the CO₂ lean stream to form a supplementary CO₂ rich stream.

8. The expander as defined in any preceding claim, wherein the first outlet is disposed in the housing at a location upstream of the rotating component and the second outlet is disposed in the housing at a location downstream of the rotating component.

9. A system for separating carbon dioxide (CO₂) from a gas stream, comprising:
(i) at least one compression stage and at least one cooling stage configured to compress and cool a gas stream;
(ii) at least one expansion stage comprising at least one expander in fluid communication with the cooling stage or the compression stage, the expander being in accordance with any preceding claim.

10. A method of separating carbon dioxide (CO₂) from a gas stream, comprising:
(i) providing an expander, comprising:
(a) a housing;
(b) at least one rotating component disposed within the housing
(c) at least one inlet disposed in the housing, wherein the inlet is configured to receive the gas stream;
(d) at least one first outlet disposed in the housing, wherein the first outlet is configured to discharge a CO₂ rich stream; and
(e) at least one second outlet disposed in the housing, wherein the second outlet is configured to discharge a CO₂ lean stream;
(ii) cooling the gas stream in the expander such that a portion of CO₂ in the gas stream forms one or both of solid CO₂ and liquid CO₂; and
(iii) separating at least a portion of one or both of solid CO₂ and liquid CO₂ from the gas stream in the expander to form the CO₂ rich stream and the CO₂ lean stream.

11. The method as defined in claim 10, wherein step (i) comprises cooling the gas stream in the expander to primarily form solid CO₂ and step (ii) comprises separating the solid CO₂ from the gas stream to form a solid CO₂ rich stream.

12. The method as defined in claim 10 or claim 11, wherein the CO₂ lean stream is substantially free of CO₂.

13. The method as defined in any one of claims 10 to 12, wherein step (ii) comprises separating at least a portion of one or both of solid CO₂ and liquid CO₂ from the gas stream in the expander through one or more separation channels.

14. The method as defined in any one of claims 10 to 13, wherein at least one component of the expander further comprises a coating configured to preclude adhesion of solid CO₂ to a surface of the expander component.

15. The method as defined in any one of claims 10 to 14, further comprising heating at least one component of the expander to preclude adhesion of solid CO₂ to a surface of the expander component.
